# EUROPÄISCHE PATENTSCHRIFT

(11) **EP 2 754 235 B1**
(45) Veröffentlichungstag und Bekanntmachung des Hinweises auf die Patenterteilung: **06.01.2016**
(21) Anmeldenummer: 12794166.4
(22) Anmeldetag: 05.09.2012
(51) Int. Cl.: H02N 2/00, H02N 2/02

(54) **ULTRASCHALLMOTOR**
ULTRASONIC MOTOR
MOTEUR À ULTRASONS

(30) Priorität: 06.09.2011 DE 102011082200
(43) Veröffentlichungstag der Anmeldung: 16.07.2014
(73) Patentinhaber: Physik Instrumente (PI) GmbH & Co. KG, 76228 Karlsruhe (DE)
(72) Erfinder: ROSENKRANZ, Mathias, 76131 Karlsruhe (DE)
(74) Vertreter: Schatt, Markus F.
(86) Internationale Anmeldenummer: PCT/DE2012/100264
(87) Internationale Veröffentlichungsnummer: WO 2013/034146

(56) Entgegenhaltungen:
- EP-A1- 2 200 101
- DE-A1- 19 750 187

## Beschreibung

Die Erfindung betrifft einen Ultraschallmotor mit einem in einer Halterung gehalterten Ultraschallaktor und einem durch den Ultraschallaktor anzutreibenden Element.

Aus der DE 196 48 726 A1 ist ein piezoelektrisches Antriebselement bekannt, bei welchem ein Schwinger aus piezoelektrischer Keramik in einem Schwingerhalter gehaltert ist, und der Schwingerhalter selber über Führungsschienen beweglich in einem Gehäuse gelagert ist. Über eine Feder wird der Schwinger gegen ein anzutreibendes Element gedrückt, wobei die Konstruktion derart ausgeführt ist, dass eine Bewegung des Schwingers in Richtung des anzutreibenden Elements möglich ist, während eine Bewegung in die beiden dazu senkrechten Richtungen weitestgehend unterbunden werden soll. Die Führungsschienen erlauben dabei eine nahezu ungehinderte Bewegung des Schwingers bzw. des Schwingerhalters in Richtung des anzutreibenden Elements (x-Richtung), während sie dessen unerwünschte Bewegung in Richtung des Gehäuses (y-Richtung) und senkrecht dazu (z-Richtung) unterbinden sollen. Justier- bzw. Einstellschrauben, die an einer Seite des Gehäuses angeordnet sind, sollen dabei helfen, die aufwändige Führungskonstruktion zu justieren.

Der Justiervorgang erfordert dabei viel Zeit und Erfahrung, da durch falsche bzw. ungenaue Positionierung der Einstellschrauben eine Deformation des Gehäuses herbeigeführt werden kann, die sich negativ auf die Beweglichkeit des Schwingers bzw. des Schwingerhalters in x-Richtung auswirkt. Durch die Deformation des Gehäuses kommt es in entsprechender Weise zu einer Lageänderung der Führungsschienen, wodurch ein störungsfreies Gleiten des Schwingerhalters innerhalb der Führungsschienen kaum mehr möglich ist. Ein störungsfreies Gleiten des Schwingerhalters ist jedoch unabdingbar für die einwandfreie Funktion des Ultraschallmotors.

In nachteiliger Weise kommt bei der DE 196 48 726 A1 erschwerend hinzu, dass eine effektive Bewegungsunterdrückung des Schwingerhalters und damit des Schwingers in z-Richtung nur mit hohem fertigungstechnischem Aufwand möglich ist. Nur bei entsprechend geringen Maßtoleranzen bezüglich der Führungskonstruktion ist hierbei gewährleistet, dass eine Bewegung in z-Richtung wirksam unterbunden ist. Hingegen führen bereits geringste Verformungen des Gehäuses und dadurch bedingte Lageänderungen der Führungsschienen bei solch engen Maßtoleranzen zu einer Behinderung der Bewegung in x-Richtung.

Das Vorstehende verdeutlicht, dass bei der DE 196 48 726 A1 der Justierung mittels Justier- bzw. Einstellschrauben eine wesentliche Bedeutung zukommt, die entsprechend zeitaufwändig und damit kostenintensiv ist.

Die DE 197 50 187 A1 offenbart einen Ultraschallmotor mit einem anzutreibenden Element, das durch einen Ultraschallaktor angetrieben wird, in einem Gehäuse durch eine sich zwischen einer das Gehäuse umgrenzenden Gehäusewandung und dem Aktor befindliche rheologische Flüssigkeit geführt ist.

Daher ist es Ziel der vorliegenden Erfindung, einen Ultraschallmotor mit einer Halterung für einen Ultraschallaktor bereitzustellen, welcher die zuvor aufgeführten und aus dem Stand der Technik bekannten Nachteile überwindet, und bei dem eine exakte und verlässliche Führung der Halterung und mit dieser des Ultraschallaktors auf einfache und kostengünstige Weise realisierbar ist.

Dies wird durch die Merkmale des unabhängigen Anspruchs erreicht. Bevorzugte Ausführungsformen sind Gegenstand der abhängigen Ansprüche.

Grundlegende Idee der Erfindung ist es, dass bei einem Ultraschallmotor mit einem in einer Halterung angeordneten und in dieser eingespannten plattenförmigen Ultraschallaktor mit zwei sich gegenüberliegenden Hauptflächen, und wenigstens vier die beiden Hauptflächen miteinander verbindenden Seitenflächen und mit einem durch den Ultraschallaktor anzutreibenden Element, wobei der Ultraschallaktor gegen das anzutreibende Element gedrückt ist, und die Halterung einen ersten Rahmen, der den Ultraschallaktor unterstützt, und einen zweiten Rahmen umfasst, in welchem der erste Rahmen über Lagerelemente gelagert und geführt ist, und die Lagerelemente mittels des zweiten Rahmens elastisch gegen den ersten Rahmen angepresst sind. Dabei ist der erste Rahmen über die Lagerelemente gegen die Hauptflächen des Ultraschallaktors angepresst, so dass Bewegungen des Ultraschallaktors in einer zu den Hauptflächen senkrechten Richtung unterbunden bzw. reduziert sind. Bei den Hauptflächen handelt es sich dabei um diejenigen Flächen des Ultraschallaktors, welche die größte Flächenausdehnung aufweisen.

Dadurch, dass die Lagerelemente mittels des zweiten Rahmens elastisch gegen den ersten Rahmen angepresst sind, und in der Folge der erste Rahmen gegen die Hauptflächen des Ultraschallaktors angepresst ist, ergibt sich zum Einen eine sehr einfach zu realisierende Möglichkeit der Unterdrückung bzw. Reduzierung unerwünschter Bewegungen des Ultraschallaktors in entsprechender Richtung, d.h. entgegengesetzt der Anpressrichtung. Für eine exakte und verlässliche Führung wirkt es sich hierbei besonders positiv aus, dass die Vorspannung, die durch A npressen der Lagerelemente gegen die Hauptflächen resultiert, symmetrisch ist. Zudem erlaubt das elastische Anpressen der Lagerelemente einen Ausgleich von eventuell vorhandenen Maßtoleranzen bezüglich des ersten und/oder zweiten Rahmens. Zum Anderen ist durch das Anpressen der Lagerelemente gegen die Hauptflächen des Ultraschallaktors deren Größe, die deutlich über der der Seitenflächen liegt, für die Lagerung bzw. Führung ausnutzbar, so dass hinsichtlich der Anzahl, Anordnung und Geometrie der Lagerelemente relativ weite Grenzen gesetzt sind. Dies erleichtert es, über die Lagerelemente ebenfalls eine unerwünschte Bewegung des ersten Rahmens bzw. des Ultraschallaktors senkrecht zur Anpressrichtung der Lagerelemente zu unterbinden. Somit erlaubt die Erfindung eine exakte Führung des Ultraschallaktors in Richtung des anzutreibenden Elements mit gleichzeitig wirksamer Unterbindung unerwünschter Bewegungen des Ultraschallaktors in den beiden dazu senkrechten Richtungen auf einfache Art und Weise, wobei ein aufwändiges und zeitintensives Justieren der Führung des den Ultraschallaktor haltenden Rahmens nicht mehr notwendig ist, da sich besagte exakte Führung bereits durch das Zusammenfügen des ersten und des zweiten Rahmens mit den dazwischen liegenden und verpressten Lagerelementen während der Montage des Ultraschallmotors ergibt.

Es kann von Vorteil sein, dass die Lagerelemente eine langgestreckte Form aufweisen und vorzugsweise stiftförmig sind. Mit Hilfe langgestreckter Lagerelemente lässt sich in besonders einfacher Weise eine Gleitführung entlang bzw. in Richtung der Lagerelemente realisieren. Zudem ist die Herstellung stiftförmiger Lagerelemente, beispielsweise aus Kunststoff, für eine entsprechende Gleitführung vergleichsweise einfach zu bewerkstelligen. Es ist jedoch auch denkbar, kugelförmige Lagerelemente für eine Rollenführung zu verwenden.

Ebenso kann es von Vorteil sein, dass die Lagerelemente in Ausnehmungen des ersten Rahmens und in den Ausnehmungen des ersten Rahmens zugeordneten Aussparungen des zweiten Rahmens gelagert sind. Dadurch gelingt eine einfache Lagerung der Lagerelemente.

Hierbei kann es von Vorteil sein, dass die Ausnehmungen des ersten Rahmens in einem Querschnitt im Wesentlichen V-förmig sind. Dies erleichtert die exakte Ausrichtung der Lagerelemente. Zudem können durch V-förmige Ausnehmungen Maßtoleranzen bzw. Durchmessertoleranzen der in diesen gelagerten Lagerelemente ausgeglichen werden.

Weiterhin kann es von Vorteil sein, dass wenigstens eine der Aussparungen des zweiten Rahmens in einem Querschnitt im Wesentlichen rechteckig ist. Dadurch ist ein Ausgleich eventueller Lagetoleranzen betreffend die Ausnehmungen des ersten Rahmens möglich.

Es kann nützlich sein, dass der erste Rahmen punktförmige Lagerungspunkte aufweist, an denen der Ultraschallaktor unterstützt ist. Dabei kann es insbesondere nützlich sein, dass die punktförmigen Lagerungspunkte Kugelsegmente sind. Durch eine punktförmige Unterstützung ergibt sich eine definierte und bestimmte Lagerung des Ultraschallaktors in der Halterung. Außerdem erlaubt das Vorsehen punktförmiger Lagerungspunkte am ersten Rahmen größere Maßtoleranzen bezüglich des Ultraschallaktors und/oder des ersten Rahmens.

Darüber hinaus kann es nützlich sein, dass der erste Rahmen wenigstens zwei Teile aufweist, wobei es vorteilhaft sein kann, dass die wenigstens zwei Teile des ersten Rahmens einen identischen Aufbau besitzen. Durch einen zwei- bzw. mehrteiligen Aufbau des ersten Rahmens ist es besonders einfach, den Ultraschallaktor während der Montage dort zu platzieren bzw. aufzunehmen, da die einzelnen Teile von außen an den Ultraschallaktor angesetzt und dann zusammengefügt werden können. Bei identischem Aufbau der Teile des ersten Rahmens können diese besonders kostengünstig hergestellt werden. Zudem vereinfacht sich bei gleichgeformten Teilen des ersten Rahmens auch dessen Montage, da eine Fehlmontage ausgeschlossen ist.

Es kann vorteilhaft sein, dass die wenigstens zwei Teile des ersten Rahmens durch ein Federelement, und vorzugsweise durch eine Blattfeder, zusammengehalten sind. Dies erlaubt auf besonders einfache Weise das Zusammenfügen der Teile des ersten Rahmens, wodurch gleichzeitig ein Einspannen und Halten des Ultraschallaktors ermöglicht ist.

Es kann auch vorteilhaft sein, dass der zweite Rahmen wenigstens zwei Teile aufweist. Dies erleichtert die Montage des Ultraschallmotors, bei welchem der erste Rahmen in dem zweiten Rahmen eingesetzt ist.

Ebenso kann es von Vorteil sein, dass der zweite Rahmen mindestens einen Federabschnitt aufweist, durch welches ein elastisches Anpressen der Lagerelemente gegen den ersten Rahmen in Richtung auf die Hauptflächen zu realisiert ist. Durch einen Federabschnitt ist das Anpressen der Lagerelemente besonders einfach realisierbar. In bevorzugter Ausführung ist der Federabschnitt zumindest teilweise bzw. abschnittsweise komplementär zur Umfangsgeometrie der damit zu kontaktierenden Lagerelemente geformt, wodurch eine optimierte Lagerung bzw. Halterung der Lagerelemente gewährleistet ist.

Hierbei kann es von Vorteil sein, dass der Federabschnitt einstückig mit dem zweiten Rahmen ausgebildet ist. Eine einstückige Ausbildung des Federabschnitts mit dem zweiten Rahmen bietet fertigungstechnische und montagerelevante Vorteile.

Hierbei kann es weiterhin von Vorteil sein, dass der zweite Rahmen zwei Federabschnitte hat, und der zweite Rahmen zwei Teile mit jeweils zwei Aussparungen und der erste Rahmen zwei Teile mit jeweils zwei Ausnehmungen besitzen, so dass sich in montiertem Zustand durch die Ausnehmungen und die zugeordneten Aussparungen vier Hohlräume ergeben, in welchen die Lagerelemente eingesetzt sind. Dadurch ergibt sich eine sehr einfache und effektive Möglichkeit zur Realisierung einer Führung des den Ultraschallaktor haltenden Rahmens bzw. des Ultraschallaktors selbst.

Es kann günstig sein, dass zwischen dem ersten Rahmen und dem zweiten Rahmen wenigstens eine Federkomponente angeordnet ist, die an dem ersten Rahmen angreift und diesen zusammen mit dem Ultraschallaktor in Richtung des durch den Ultraschallaktor anzutreibenden Elements drückt. Dies ermöglicht ein verlässliches Andrücken des Ultraschallaktors an das anzutreibende Element und damit einen störungsfreien Betrieb des Ultraschallmotors.

Kombinationen der zuvor aufgeführten vorteilhaften Weiterbildungen der Erfindung bzw. Kombinationen von einzelnen Teilen der zuvor aufgeführten vorteilhaften Weiterbildungen sind ebenso denkbar.

Es zeigen in schematischer und nicht notwendigerweise maßstabsgetreuer Weise:
Fig. 1: Explosionsdarstellung einer Ausführungsform der Halterung des Ultraschallmotors
Fig. 2: Darstellung eines Ultraschallmotors mit einer Halterung gemäß Fig. 1
Fig. 3: Draufsichtdarstellung der Halterung gemäß Fig. 1
Fig. 4: Darstellung einer Einzelheit der Halterung gemäß Fig. 1
Fig. 5: Darstellung einer weiteren Einzelheit der Halterung gemäß Fig. 1

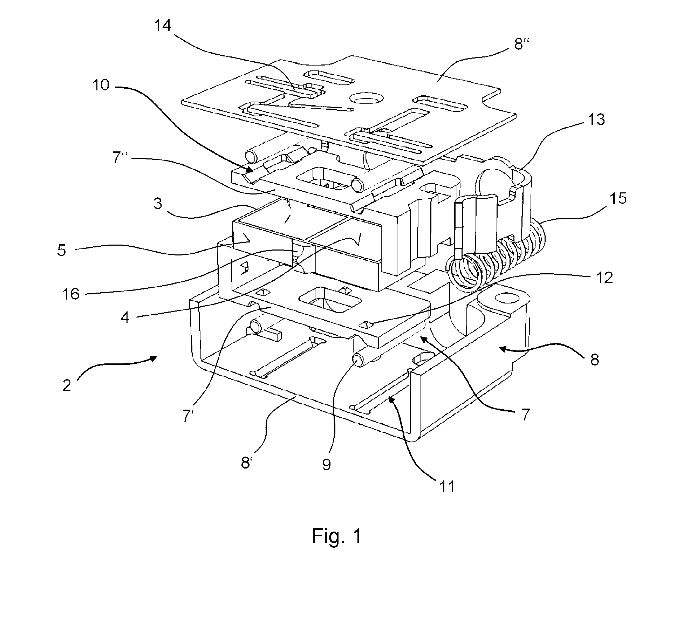

Figur 1 zeigt in einer Explosionsdarstellung eine Ausführungsform der Halterung des erfindungsgemäßen Ultraschallmotors. Das anzutreibende Element des Ultraschallmotors ist hierbei nicht dargestellt. Die Halterung 2 umfasst einen ersten Rahmen 7 und einen zweiten Rahmen 8. Der erste Rahmen 7 besteht aus Kunststoff und umfasst zwei identisch geformte Teile 7' und 7" mit L-förmiger Geometrie, während der zweite Rahmen aus gefrästem Aluminium besteht und zwei unterschiedlich geformte Teile 8' und 8" aufweist.

Innerhalb des ersten Rahmens 7 ist ein piezoelektrischer Ultraschallaktor 3 mit zwei Hauptflächen 4 und vier Seitenflächen 5 eingespannt, der sich an pyramidenförmigen Lagerungspunkten 12, die integral mit dem ersten Rahmen 7 ausgeführt sind, abstützt. Die pyramidenförmigen Lagerungspunkte 12 sind dabei so angeordnet, dass die Dämpfung des Ultraschallaktors minimiert ist.

Ein an einer freien Seitenfläche 5 angeordnetes Friktionselement 16 aus verschleißbeständigem Keramikmaterial ist zum Kontakt mit dem anzutreibenden Element vorgesehen. Das Friktionselement 16 ist dabei mittels Stoffschluss, beispielsweise durch Kleben, mit dem Ultraschallaktor 3 verbunden.

Die beiden Teile 7' und 7" des ersten Rahmens sind über ein Federelement 13 zusammengehalten, wobei das Federelement 13 die beiden Teile 7' und 7" umgreift und in jeweils daran vorgesehene Ausnehmungen bzw. Nuten eingreift. Das Federelement 13 sorgt gleichzeitig dafür, dass die Lagerungspunkte 12 in Kontakt mit dem Ultraschallaktor 3 stehen bzw. an diesen angepresst sind. Eine Bewegung des Ultraschallaktors 3 innerhalb des ersten Rahmens 7 ist somit nicht möglich bzw. nicht vorgesehen.

Sowohl das Teil 7', als auch das Teil 7" des ersten Rahmens 7 weist zwei Ausnehmungen 10 auf, die V-förmig bzw. wannenförmig sind. In den Ausnehmungen 10 sind stiftförmige Lagerelemente 9 als Gleitelemente aus tribologisch optimiertem Kunststoff eingesetzt, wobei die Gleitelemente 9 nicht komplett in den Ausnehmungen 10 versenkt sind, sondern ein Teil davon über die Oberfläche des ersten Rahmens 7 hinausragt. Der überstehende Teil der Gleitelemente 9 ist aufgenommen in den Ausnehmungen 10 zugeordneten Aussparungen 11 des zweiten Rahmens 8. Hierbei weist das Teil 8' zwei Aussparungen 11 auf, wovon eine im Querschnitt V-förmig und eine im Querschnitt rechteckig ist.

Das Teil 8", das im Wesentlichen eine dünne Platte bzw. ein Blech darstellt, besitzt ebenso zwei Aussparungen 11, die jedoch durchgehend sind, so dass sich entsprechende Öffnungen in dem Teil 8" ergeben, welche durch einstückig mit dem Teil 8" ausgebildete Federabschnitte 14 begrenzt sind. Diese Federabschnitte 14 wirken auf die durch die durch die Aussparungen 11 gebildeten Öffnungen ragenden Gleitelemente 9 und drücken diese in die Ausnehmungen 10 des ersten Rahmens 7. Es kann dabei vorteilhaft sein, dass die Federabschnitte 14 des Teils 8" eine zur Umfangsgeometrie der Gleitelemente 9 korrespondierende oder komplementäre Form besitzen, so dass ein teilweises bzw. abschnittsweises Umschließen der Gleitelemente 9 durch die Federabschnitte 14 gewährleistet ist.

Weiterhin bewirkt die von den Federabschnitten 14 auf die Gleitelemente 9 durch direkten Kontakt ausgeübte Kraft, dass auch die entsprechend gegenüberliegend angeordneten Gleitelemente 9 zwischen den Ausnehmungen 10 des ersten Rahmens 7 und den Aussparungen 11 des zweiten Rahmens 8 eingespannt sind.

Dadurch, dass eine Aussparung 11 des Teils 8' des zweiten Rahmens 8 eine rechteckige Querschnittsgeometrie aufweist, wobei deren Breite größer als der Durchmesser der Gleitelemente 9 ist, ist hierüber ein Ausgleich von Lagetoleranzen betreffend die Ausnehmungen 10 des ersten Rahmens 7 möglich.

Zwischen erstem Rahmen 7 und zweitem Rahmen 8 sind zwei Federkomponenten 15 in Form von Schraubenfedern angeordnet, welche sich an dem zweiten Rahmen 8 abstützen und auf den ersten Rahmen 7 dergestalt wirken, dass sie den ersten Rahmen 7 und mit diesem den darin angeordneten Ultraschallaktor 3 in Richtung des anzutreibenden Elements drücken. Hierbei ragen die Schraubenfedern durch entsprechende Öffnungen im Federelement 13.

Die Gleitelemente 9 selber können keine Relativbewegung in deren Längsrichtung ausführen. Lediglich die geführte Bewegung des ersten Rahmens 7 entlang der Gleitelemente 9 ist möglich, während Bewegungen senkrecht dazu wirkungsvoll unterbunden bzw. reduziert sind, da sich der erste Rahmen 7 in den entsprechenden Richtungen an den Gleitelementen 9 abstützt. Somit ist eine Bewegung des ersten Rahmens 7 und damit des fest in diesem eingespannten Ultraschallaktors 3 nur in Richtung der freien Seitenfläche 5 und damit in Richtung des anzutreibenden Elements möglich.

Dadurch, dass der erste Rahmen 7 entlang der Gleitelemente 9 gleitet, die zwischen erstem Rahmen 7 und zweitem Rahmen 8 angeordnet sind, spielt es für die tribologischen Eigenschaften und damit für die Motorperformance keine Rolle, wie bzw. aus welchem Material der zweite Rahmen 8 gefertigt ist. Denkbar ist beispielsweise auch ein aus Kunststoff gespritzter zweiter Rahmen 8. Die Motorperformance hängt nämlich in entscheidender Weise davon ab, ob die Kraft, mit welcher der Ultraschallaktor gegen das anzutreibende Element gepresst ist, gleichbleibend ist. Die Anpresskraft wiederum hängt von den Reib- bzw. Gleiteigenschaften der Werkstoffe von erstem Rahmen 7 und den Gleitelementen 9 ab. Um optimierte Reib- bzw. Gleiteigenschaften zu erzielen, ist eine geeignete Werkstoffkombination notwendig. Für die Reib- und Gleiteigenschaften und damit die gleichmäßige bzw. gleichbleibende Anpressung des Ultraschallaktors 3 an das anzutreibende Element ist lediglich die Kombination der Materialien des ersten Rahmens 7 und der Gleitelemente 9. Hier kann auf einfache Weise und unabhängig von der Werkstoffwahl betreffend den zweiten Rahmen 8 eine entsprechende Optimierung vorgenommen werden.

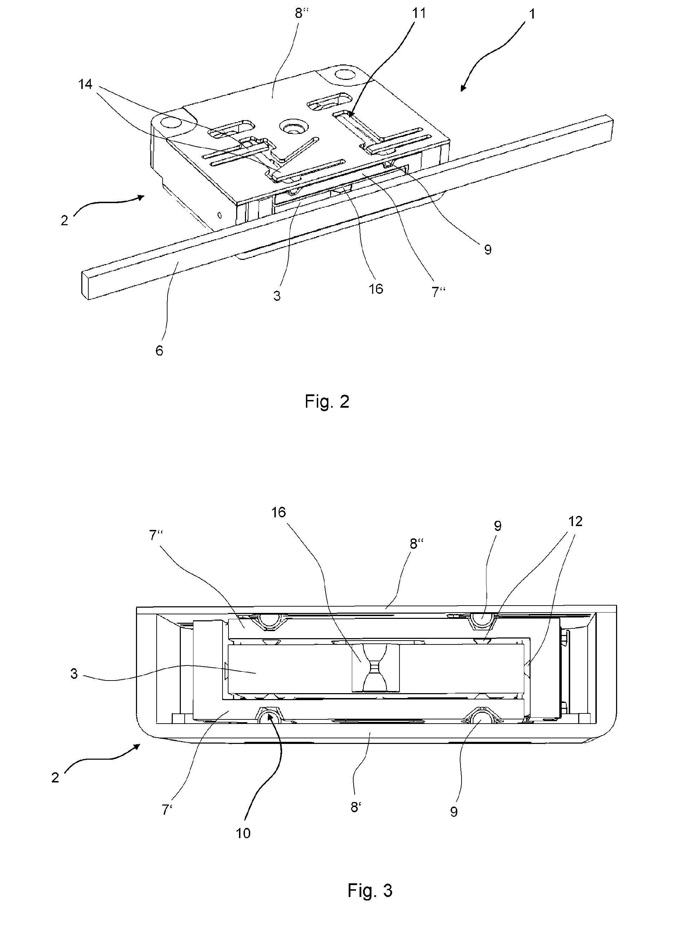

Fig. 2 zeigt eine Ausführungsform eines erfindungsgemäßen Ultraschallmotors mit einer Halterung 2 gemäß Fig. 1. Das anzutreibende Element 6 hat eine rechteckige Querschnittsgeometrie und besteht aus verschleißbeständigem Keramikmaterial. Andere Materialien mit hoher Verschleißbeständigkeit sind hierfür ebenso denkbar. Möglich ist zudem, dass das anzutreibende Element 6 mehrlagig aufgebaut ist und eine verschleißbeständige Oberflächenbeschichtung aufweist, die zum Kontakt mit dem Friktionselement 16 des Ultraschallaktors 3 vorgesehen ist.

Fig. 3 zeigt in einer Draufsichtdarstellung die Halterung gemäß Fig. 1. Hieran ist die Anordnung der einzelnen Teile der Halterung 2 in zusammengebautem Zustand deutlicher zu erkennen. Der Ultraschallaktor 3 ist zwischen den beiden Teilen 7' und 7" des ersten Rahmens 7 fest eingespannt, wobei sich dieser an den punktförmigen Lagerungspunkten 12 abstützt. Der erste Rahmen 7 und der zweite Rahmen 8 sind gegeneinander verspannt, indem die Federabschnitte 14 des Teils 8" des zweiten Rahmens 8 auf die mit diesen in Kontakt stehenden Gleitelemente 9 wirken. Der absolut symmetrische Aufbau führt in entsprechender Weise zu symmetrischen und definierten Spannungsverhältnissen. Durch das Verspannen sind die Gleitelemente 9 in ihrer Lage fixiert, und durch die langgestreckte Form der Gleitelemente in Kombination mit der korrespondierenden Geometrie der Ausnehmungen 10 bzw. der Aussparungen 11 erfolgt automatisch beim Zusammenfügen aller Teile der Halterung 2 während ihrer Montage die gewünschte Ausrichtung des ersten Rahmens 7 bezüglich des zweiten Rahmens 8, und dies weitgehend unabhängig von Maß-, Lage oder Einbautoleranzen. Durch die Verspannung in Richtung auf die Hauptflächen des Ultraschallaktors zu über Federabschnitte 14 ist hierbei auch ein Ausgleich von normalerweise vorhandenen Dickentoleranzen des Ultraschallaktors 3 gegeben.

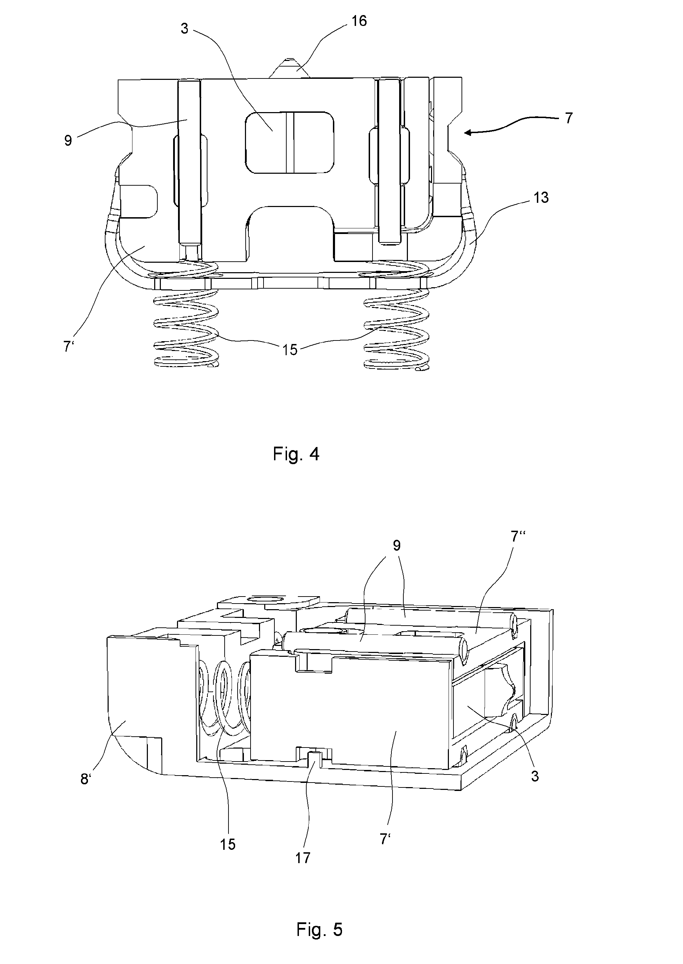

Fig. 4 zeigt einen Teil einer Halterung 2 eines erfindungsgemäßen Ultraschallmotors, welche insbesondere die Anordnung des Federelements 13 und der Federkomponenten 15 verdeutlicht. Das Federelement 13 umgreift den ersten Rahmen 7 im Wesentlichen U-förmig, wobei die beiden Schenkel des Federelements in entsprechende Nuten des ersten Rahmens 7 eingreifen. In dem Federelement 13 befinden sich zwei Öffnungen, durch welche die Federkomponenten 15 ragen, wobei sich diese in Anlage mit dem ersten Rahmen 7 befinden. Die Federkomponenten 15 stützen sich andererseits an dem in Fig. 4 nicht dargestellten zweiten Rahmen 8 ab.

Fig. 5 zeigt einen Teil einer Halterung 2 eines erfindungsgemäßen Ultraschallmotors. Das Teil 8' des zweiten Rahmens weist hierbei einen Stegabschnitt 17 auf, der in eine entsprechende Ausnehmung bzw. Nut des Teils 7' des ersten Rahmens eingreift. Obwohl Fig. 5 nicht entnehmbar, befindet sich in identischer Weise auf der gegenüberliegenden Seite ebenfalls ein Stegabschnitt, der in gleichem Eingriff mit dem Teil 7' des ersten Rahmens steht. Hierdurch ist ein Herausfallen des ersten Rahmens 7 und mit diesem des fest in dem ersten Rahmen 7 eingespannten Ultraschallaktors 3 aus dem zweiten Rahmen 8 wirkungsvoll unterbunden.

Wenngleich in den oben beschriebenen Ausführungsformen als Lagerelemente 9 Gleitelemente für eine gleitende Führung zur Anwendung kommen, sind jegliche andere aus dem Stand der Technik bekannte Lager- bzw. Führungselemente für Gleit- oder Rollenführung denkbar.

Der erfindungsgemäße Ultraschallmotor zeichnet sich dadurch aus, dass dessen Montage sehr einfach bewerkstelligt werden kann, wobei eine aufwändige Justierung bzw. Einstellung bezüglich der Führung des Ultraschallaktors überflüssig ist. Besagte Führung erlaubt auf einfache Art und Weise den Ausgleich von Maß-, Lage- oder Montagetoleranzen und gestattet dabei eine sehr stabile und zuverlässige Motorperformance.

## Patentansprüche

1. Ultraschallmotor (1), aufweisend eine Halterung (2) mit einem ersten Rahmen (7) und einem zweiten Rahmen (8), einen in der Halterung (2) angeordneten plattenförmigen Ultraschallaktor (3) mit zwei sich gegenüberliegenden Hauptflächen (4) und wenigstens vier die Hauptflächen (4) miteinander verbindenden Seitenflächen (5), und ein anzutreibendes Element (6),
wobei der Ultraschallaktor (3) mit einem an einer freien Seitenfläche (5) des Ultraschallaktors (3) angeordneten Friktionselement (16) gegen das anzutreibende Element (6) gedrückt ist,
wobei der erste Rahmen (7) den Ultraschallaktor (3) einspannt und durch Lagerelemente (9) in dem zweiten Rahmen (8) derart gelagert und geführt ist, dass eine Bewegung des ersten Rahmens (7) nur in Richtung des anzutreibenden Elements (6) möglich ist, und
wobei die Lagerelemente (9) mittels des zweiten Rahmens (8) elastisch gegen den ersten Rahmen (7) angepresst sind und dadurch der erste Rahmen (7) über die Lagerelemente (9) gegen die Hauptflächen (4) des Ultraschallaktors (3) angepresst ist, so dass Bewegungen des Ultraschallaktors (3) in einer zu den Hauptflächen (4) senkrechten Richtung unterbunden oder reduziert sind.

2. Ultraschallmotor nach Anspruch 1, **dadurch gekennzeichnet, dass** die Lagerelemente (9) eine langgestreckte Form aufweisen und stiftförmig sind.

3. Ultraschallmotor nach einem der vorangegangenen Ansprüche, **dadurch gekennzeichnet, dass** die Lagerelemente (9) in Ausnehmungen (10) des ersten Rahmens (7) und in den Ausnehmungen (10) des ersten Rahmens (7) zugeordneten Aussparungen (11) des zweiten Rahmens (8) gelagert sind.

4. Ultraschallmotor nach Anspruch 3, **dadurch gekennzeichnet, dass** die Ausnehmungen (10) des ersten Rahmens (7) in einem Querschnitt V-förmig sind.

5. Ultraschallmotor nach Anspruch 3 oder 4, **dadurch gekennzeichnet, dass** wenigstens eine der Aussparungen (11) des zweiten Rahmens (8) in einem Querschnitt im Wesentlichen rechteckig ist.

6. Ultraschallmotor nach einem der vorangegangenen Ansprüche, **dadurch gekennzeichnet, dass** der erste Rahmen (7) punktförmige Lagerungspunkte(12) aufweist, an denen der Ultraschallaktor (3) unterstützt ist.

7. Ultraschallmotor nach Anspruch 6, **dadurch gekennzeichnet, dass** die punktförmigen Lagerungspunkte (12) Kugelsegmente sind.

8. Ultraschallmotor nach einem der vorangegangenen Ansprüche, **dadurch gekennzeichnet, dass** der erste Rahmen (7) wenigstens zwei Teile (7', 7") aufweist.

9. Ultraschallmotor nach Anspruch 8, **dadurch gekennzeichnet, dass** die wenigstens zwei Teile (7', 7") des ersten Rahmens (7) einen identischen Aufbau aufweisen.

10. Ultraschallmotor nach Anspruch 8 oder 9, **dadurch gekennzeichnet, dass** die wenigstens zwei Teile (7', 7") des ersten Rahmens (7) durch ein Federelement(13), vorzugsweise durch eine Blattfeder, zusammengehalten sind.

11. Ultraschallmotor nach einem der vorangegangenen Ansprüche, **dadurch gekennzeichnet, dass** der zweite Rahmen (8) wenigstens zwei Teile (8',8") aufweist.

12. Ultraschallmotor nach einem der vorangegangenen Ansprüche, **dadurch gekennzeichnet, dass** der zweite Rahmen (8) mindestens einen Federabschnitt (14) aufweist, durch welchen ein elastisches Anpressen der Lagerelemente (9) gegen den ersten Rahmen (7) in Richtung auf die Hauptflächen (4) zu realisiert ist.

13. Ultraschallmotor nach Anspruch 12, **dadurch gekennzeichnet, dass** der Federabschnitt (14) einstückig mit dem zweiten Rahmen (8) ausgebildet ist.

14. Ultraschallmotor nach Anspruch 13, **dadurch gekennzeichnet, dass** der zweite Rahmen (8) zwei Federabschnitte (14) hat, und der zweite Rahmen (8) zwei Teile (8', 8") mit jeweils zwei Aussparungen (11) und der erste Rahmen (7) zwei Teile (7',7") mit jeweils zwei Ausnehmungen (10) aufweist, so dass sich in montiertem Zustand durch die Ausnehmungen (10) und die zugeordneten Aussparungen (11) vier Hohlräume ergeben, in welche die Lagerelemente (9) eingesetzt sind.

15. Ultraschallmotor nach einem der vorangegangenen Ansprüche, **dadurch gekennzeichnet, dass** zwischen dem ersten Rahmen (7) und dem zweiten Rahmen (8) wenigstens eine Federkomponente (15) angeordnet ist, die an dem ersten Rahmen (7) angreift und diesen zusammen mit dem Ultraschallaktor (3) in Richtung des durch den Ultraschallaktor (3) anzutreibenden Elements (6) drückt.

## Claims

1. Ultrasonic motor (1), the ultrasonic motor (1) comprising a holding device (2) with a first frame (7) and a second frame (8), a plate-shaped ultrasonic actuator (3) which is disposed in the holding device (2), the ultrasonic actuator (3) comprising two opposing main surfaces (4) and at least four side surfaces (5) which connect the main surfaces (4) with each other, and an element (6) to be driven,
wherein the ultrasonic actuator (3) with a friction element (16) which is disposed on a free side surface (5) of the ultrasonic actuator (3) is pressed against the element (6) to be driven,
wherein the first frame (7) clamps the ultrasonic actuator (3) and by means of supporting elements (9) is supported and guided in the second frame (8) in such a manner that a movement of the first frame (7) only in the direction of the element (6) to be driven is possible, and
wherein the supporting elements (9) by means of the second frame (8) are elastically pressed against the first frame (7) and thereby the first frame (7) by means of the supporting elements (9) is pressed against the main surfaces (4) of the ultrasonic actuator (3) so that movement of the ultrasonic actuator (3) in a direction which is perpendicular to one of the main surfaces (4) is suppressed or reduced.

2. Ultrasonic motor according to claim 1, **characterized in that** the supporting elements (9) comprise a longitudinally extending shape and are pin-shaped.

3. Ultrasonic motor according to one of the preceding claims, **characterized in that** the supporting elements (9) are supported in recesses (10) of the first frame (7) and in openings (11) of the second frame (8) which are assigned to the recesses (10) of the first frame (7).

4. Ultrasonic motor according to claim 3, **characterized in that** the recesses (10) of the first frame (7) comprise a V-shaped cross-section.

5. Ultrasonic motor according to claim 3 or 4, **characterized in that** at least one of the openings (11) of the second frame (8) comprises a substantially rectangular cross-section.

6. Ultrasonic motor according to one of the preceding claims, **characterized in that** the first frame (7) comprises dot-shaped supporting spots (12) at which the ultrasonic actuator (3) is supported.

7. Ultrasonic motor according to claim 6, **characterized in that** the dot-shaped supporting spots (12) are spherical segments.

8. Ultrasonic motor according to one of the preceding claims, **characterized in that** the first frame (7) comprises at least two parts (7', 7").

9. Ultrasonic motor according to claim 8, **characterized in that** the at least two parts (7', 7") comprise an identical structure.

10. Ultrasonic motor according to claim 8 or 9, **characterized in that** the at least two parts (7', 7") of the first frame (7) are held together by a spring element (13), preferably by a leave spring.

11. Ultrasonic motor according to one of the preceding claims, **characterized in that** the second frame (8) comprises at least two parts (8', 8").

12. Ultrasonic motor according to one of the preceding claims, **characterized in that** the second frame (8) comprises at least one spring portion (14) by means of which an elastically pressing of the supporting elements (9) against the first frame (7) in the direction towards the main section (4) is realized.

13. Ultrasonic motor according to claim 12, **characterized in that** the spring portion (14) and the second frame (8) are formed in one piece.

14. Ultrasonic motor according to claim 13, **characterized in that** the second frame (8) comprises two spring portions (14), and the second frame (8) comprises two parts (8', 8") with two openings (11), respectively, and the first frame (7) comprises two parts (7', 7") with two recesses (10), respectively, so that in an assembled state four hollow spaces are formed by the recesses (10) and the assigned openings (11), in which hollow spaces the supporting elements (9) are inserted.

15. Ultrasonic motor according to one of the preceding claims, **characterized in that** between the first frame (7) and the second frame (8) at least one spring component (15) is disposed which contacts the first frame (7) and pushes the first frame (7) together with the ultrasonic actuator (3) in the direction of the element (6) to be driven by the ultrasonic actuator (3).

## Revendications

1. Moteur à ultrasons (1) présentant une fixation (2) avec un premier cadre (7) et un deuxième cadre (8), un actionneur à ultrasons (3) en forme de plaque disposé dans la fixation (2) avec deux surfaces principales (4) situées en vis-à-vis l'une de l'autre et au moins quatre surfaces latérales (5) reliant les quatre surfaces principales (4) entre elles, et un élément à entraîner (6),
l'actionneur à ultrasons (3) étant pressé contre l'élément à entraîner (6) avec un élément de friction (16) disposé sur une surface latérale libre (5) de l'actionneur à ultrasons (3),
le premier cadre (7) serrant l'actionneur à ultrasons (3) et étant monté et guidé dans le deuxième cadre (8) grâce à des éléments de palier (9) de manière à ce qu'un mouvement du premier cadre (7) est seulement possible en direction de l'élément à entraîner (6), et
les éléments de palier (9) étant pressés élastiquement au moyen du deuxième cadre (8) contre le premier cadre (7) et de ce fait, le premier cadre (7) étant pressé via les éléments de palier (9) contre les surfaces principales (4) de l'actionneur à ultrasons (3) de sorte que des mouvements de l'actionneur à ultrasons (3) sont empêchés ou réduits dans une direction perpendiculaire aux surfaces principales (4).

2. Moteur à ultrasons selon la revendication 1, **caractérisé en ce que** les éléments de palier (9) présentent une forme allongée et sont en forme de tige.

3. Moteur à ultrasons selon l'une des revendications précédentes, **caractérisé en ce que** les éléments de palier (9) sont montés dans des évidements (10) du premier cadre (7) et dans des évidements (11) associés aux évidements (10) du premier cadre (7) du deuxième cadre (8).

4. Moteur à ultrasons selon la revendication 3, **caractérisé en ce que** les évidements (10) du premier cadre (7) sont en forme de V en section transversale.

5. Moteur à ultrasons selon la revendication 3 ou 4, **caractérisé en ce qu'**au moins l'un des évidements (11) du deuxième cadre (8) est sensiblement rectangulaire en section transversale.

6. Moteur à ultrasons selon l'une des revendications précédentes, **caractérisé en ce que** le premier cadre (7) présente des points de montage (12) en forme de points au niveau desquels l'actionneur à ultrasons (3) est supporté.

7. Moteur à ultrasons selon la revendication 6, **caractérisé en ce que** les points de montage (12) en forme de points sont des segments sphériques.

8. Moteur à ultrasons selon l'une des revendications précédentes, **caractérisé en ce que** le premier cadre (7) présente au moins deux parties (7', 7").

9. Moteur à ultrasons selon la revendication 8, **caractérisé en ce que** ces au moins deux parties (7', 7") du premier cadre (7) présentent une structure identique.

10. Moteur à ultrasons selon la revendication 8 ou 9, **caractérisé en ce que** ces au moins deux parties (7', 7") du premier cadre (7) sont maintenues ensemble grâce à un élément de ressort (13), de préférence grâce à un ressort à lame.

11. Moteur à ultrasons selon l'une des revendications précédentes, **caractérisé en ce que** le deuxième cadre (8) présente au moins deux parties (8', 8").

12. Moteur à ultrasons selon l'une des revendications précédentes, **caractérisé en ce que** le deuxième cadre (8) présente au moins une partie de ressort (14) grâce à laquelle un serrage élastique des éléments de palier (9) contre le premier cadre (7) est réalisé en direction vers les surfaces principales (4).

13. Moteur à ultrasons selon la revendication 12, **caractérisé en ce que** la partie de ressort (14) est réalisée d'une seule pièce avec le deuxième cadre (8).

14. Moteur à ultrasons selon la revendication 13, **caractérisé en ce que** le deuxième cadre (8) présente deux parties de ressort (14), et **en ce que** le deuxième cadre (8) présente deux parties (8', 8") avec respectivement deux évidements (11) et le premier cadre (7) présente deux parties (7', 7") avec respectivement deux évidements (10) de sorte qu'à l'état monté, grâce aux évidements (10) et aux évidements (11) associés, on obtient quatre espaces creux dans lesquels les éléments de palier (9) sont mis en place.

15. Moteur à ultrasons selon l'une des revendications précédentes, **caractérisé en ce qu'**au moins un composant de ressort (15) est disposé entre le premier cadre (7) et le deuxième cadre (8), lequel est en prise sur le premier cadre (7) et presse celui-ci, ensemble avec l'actionneur à ultrasons (3), en direction de l'élément à entraîner (6) par l'actionneur à ultrasons (3).
